(19) **Europäisches Patentamt**
**European Patent Office**
**Office européen des brevets**

(11) **EP 4 663 819 A1**

(12) # EUROPEAN PATENT APPLICATION

(43) Date of publication:
**17.12.2025 Bulletin 2025/51**

(21) Application number: **24181251.0**

(22) Date of filing: **10.06.2024**

(51) International Patent Classification (IPC):
***C25D 11/02*** (2006.01)   ***C25D 11/34*** (2006.01)
***H01M 4/00*** (2006.01)

(52) Cooperative Patent Classification (CPC):
**C25D 11/022; C25D 11/024; C25D 11/26;**
**H01M 4/0452; H01M 4/131;** H01M 4/366

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
 • **Imec VZW**
**3001 Leuven (BE)**

 • **Katholieke Universiteit Leuven
KU Leuven Research & Development
3000 Leuven (BE)**

(72) Inventors:
 • **VEREECKEN, Philippe
Hoegaarden (BE)**
 • **KHURANA, Divyansh
3001 Leuven (BE)**

(74) Representative: **Winger
Mouterij 16 bus 101
3190 Boortmeerbeek (BE)**

(54) **MESOPOROUS METAL OXIDE LAYER**

(57)     A method for fabricating a metal oxide layer involves providing a metallic nitride substrate and performing electrochemical oxidation of the metallic nitride substrate in either an acidic or basic environment to form the metal oxide layer. This electrochemical oxidation process is characterized by a gas-evolving reaction that results in the formation and escape of nitrogen gas from the forming metal oxide layer such that a mesoporous 3D interconnected metal oxide structure comprising a 3D network of interconnected pores is formed. This method enables the creation of metal oxide layers with specific properties suitable for various applications, including but not limited to, use in batteries, and as electrodes in molecular synthesis.

**FIG. 6**

EP 4 663 819 A1

**Description**

**Field of the invention**

The present invention relates to the field of metal oxide materials and methods for their fabrication. More specifically it relates to a method for fabricating a porous metal oxide layer and to a metal oxide layer obtained using such a method.

**Background of the invention**

In the realm of electrochemical energy storage and conversion, the development of efficient and durable electrode materials stands as a pivotal challenge. Among various materials, titanium dioxide ($TiO_z$) has gained attention due to its favorable properties such as chemical stability, low cost, and environmental benignity. $TiO_2$, in particular, has been extensively studied for its application in batteries, where its ability to host cations through insertion and de-insertion processes is crucial for the operation of devices such as lithium-ion batteries. Despite research on the application of $TiO_2$ in batteries, to our knowledge, there are currently no commercial applications available. Beyond energy storage, $TiO_2$'s potential role in electrocatalysis and molecular synthesis, facilitated by a similar interaction with cations, underscores its versatility and importance in modern electrochemical applications.

However, the practical utility of $TiO_2$ and similar mesoporous metal oxide electrodes is hampered by several technical challenges. One significant limitation is the relatively small currents achieved during surface-limited cation (de) insertion, attributed to the low porosity, and hence low surface areas, of most three-dimensional (3D) architectures. This limitation not only affects the efficiency of energy storage devices but also restricts the effectiveness of $TiO_z$ in applications requiring high cation fluxes, such as in certain electrocatalytic processes.

Another critical issue is the restricted range of cations that can be reversibly inserted into $TiO_2$ in aqueous solutions, primarily limited to protons ($H^+$) and lithium ions ($Li^+$). The reversible insertion of other cations, such as sodium ($Na^+$), potassium ($K^+$), and magnesium ($Mg^{2+}$), remains a significant challenge, limiting the versatility and applicability of $TiO_2$-based electrodes in a broader range of electrochemical devices and applications.

The fabrication methods for creating nanostructured or mesoporous $TiO_2$ also present obstacles. Traditional chemistry-based methods, such as sol-gel processes, often result in nanoparticles or nanoshapes that must be cast onto current collectors. These methods face limitations in achieving conformality and uniform coverage of the current collectors, which are critical for optimizing the performance of the electrodes in practical applications.

Despite the progress made in developing $TiO_2$ and other mesoporous metal oxide electrodes for electrochemical applications, these challenges highlight the need for further advancements in the field. There is a need for innovative approaches to fabricate mesoporous metal oxide electrodes with enhanced porosity, capable of supporting high cation (de)insertion currents and accommodating a wider range of cations. Additionally, the development of fabrication techniques that ensure conformal and uniform coverage of current collectors is advantageous for realizing the full potential of these materials in energy storage, electrocatalysis, and beyond.

**Summary of the invention**

It is an object of embodiments of the present invention to enhance the currents for reversible ion insertion in metal oxide electrodes. This is achieved with a mesoporous amorphous 3D interconnected metal oxide nanostructure, forming an electronically conductive structure.

In the first aspect, the present invention relates to a method for fabricating a metal oxide layer, comprising:

- providing a metallic nitride substrate;
- performing electrochemical oxidation of the metallic nitride substrate in an acidic environment or in a basic environment to form the metal oxide layer;
- such that during the electrochemical oxidation nitrogen gas escapes from the metal nitride substrate through the metal oxide layer and forms a mesoporous interconnected metal oxide structure comprising a 3D network of interconnected pores.

This method allows for the creation of targeted, conformal, and even patterned mesoporous metal oxide layers in the form of an amorphous 3D nano metal oxide scaffold comprising a 3D network of interconnected pores.

It is an advantage of embodiments of the present invention that the accumulation of $N_2$, during the electrochemical oxidation of the metallic nitride substrate, within the formed metal oxide results in an increasing pressure up to the moment the amount of pressure is high enough such that the nitrogen gas can escape thereby generating a three-dimensional porous network within the metal oxide layer.

It is, moreover, advantageous that due to the formed three-dimensional porous network, underlying metallic nitride substrate which was not yet oxidated is accessible through the pores for further oxidation.

It is, moreover, advantageous that the obtained metal oxide comprises a three-dimensional porous network resulting in increased currents for reversible ion insertion compared to a metal oxide structure which is less porous.

It is, moreover, advantageous that a structure is obtained which allows reversible ion insertion for a plurality of ions.

In embodiments, the metallic nitride may be titanium nitride. Titanium nitride is an ideal substrate for forming porous titanium dioxide. It is an advantage of embodiments of the present invention that the obtained titanium oxide serves as a good host material for cation insertion. In embodiments of the present invention a mesoporous metal oxide structure comprising a 3D network of interconnected titania and a 3D network of interconnected pores is formed.

In embodiments, the metal of the metallic nitride may be a metal which gives insoluble oxides (e.g. ZrN or HfN).

In embodiments of the present invention the electrochemical oxidation is done in an acidic environment. In embodiments, the acidic environment may comprise a sulfuric acid solution. In an exemplary embodiment of the present invention, 1.68M sulfuric acid is used. The invention is, however, not limited thereto.

In embodiments, the electrochemical oxidation may be achieved using a reference electrode in contact with the acidic or basic environment, and a metal counter electrode in the acidic or basic environment. This three-electrode setup enables precise control over the oxidation process.

In embodiments, performing electrochemical oxidation may include applying a voltage between the metallic nitride substrate and the reference electrode or applying a current through the metal counter electrode. Applying a voltage or current drives the oxidation reaction. It is noted that the reference electrode is optional. It is for example not standard in commercial anodizing tools.

In embodiments, the voltage may be applied by linear sweeping or cyclic sweeping. In embodiments of the present invention sweeping the voltage may allow tuning the pore size and pore distribution in the oxide layer.

In embodiments, the reference electrode may be an Ag/AgCl electrode. Ag/AgCl provides a stable reference potential.

In embodiments, the method may further comprise depositing a patterned mask on the metallic nitride substrate prior to electrochemical oxidation to form a patterned metal oxide layer. The mask enables selective oxidation to create metal oxide patterns.

In the second aspect, the present invention relates to a metal oxide layer wherein the metal oxide layer comprises a mesoporous amorphous 3D interconnected metal oxide nanostructure. In embodiments of the present invention the interconnected metal oxide structure is a 3D nano metal oxide scaffold with a 3D network of interconnected pores. In embodiments of the present invention the interconnected metal oxide (e.g. $TiO_2$) forms an electronically conductive structure. A conductive interconnected porous metal oxide nanostructure is advantageous over a porous structure of loosely or poorly connected nano-particles, which have a very high percolation resistance, and it allows to prepare porous metal oxide layers of much larger thicknesses.

The interconnected pore network provides high volumetric surface area (that is high surface area-to-volume ratio) and high porosity for enhanced performance.

In embodiments, the metal oxide layer may comprise titanium dioxide. Titanium dioxide has excellent properties as a host for cation insertion. It is noted that TiOz (with Ti(IV)) is a poor electronic conductor but becomes a decent electronic conductor when its cations are intercalated upon reduction to Ti(III). As such, in embodiments of the present invention, the cathodic reduction and intercalation occur from the bottom up: first at the bottom closest to the current collector and then upwards.

In the third aspect, the present invention relates to a battery, wherein an electrode of the battery comprises a metal oxide layer according to any embodiments of the second aspect.

The porous metal oxide provides high reversible ion storage capacity for the battery.

In the fourth aspect, the present invention relates to a metal ion insertion device for ion catalysed reactions comprising at least one electrode which comprises a metal oxide layer according to embodiments of the present invention.

In embodiments of the present invention the metal oxide layer of the metal ion insertion device is a patterned layer.

The high surface area and ion conductivity make the metal oxide layer an efficient electrode for driving electrochemical reactions dependent on the presence or absence of certain cations.

It is an advantage of embodiments of the present invention that a method for fabricating a metal oxide layer through electrochemical oxidation of a metallic nitride substrate in either an acidic or basic environment is provided, where the process is facilitated by a gas-evolving reaction allowing nitrogen gas to escape from the metal oxide layer, thereby creating a porous structure. It is a further advantage that the metallic nitride used can be titanium nitride, which is known for its excellent conductivity and compatibility with various electrolytes. Additionally, it is advantageous that the acidic environment can include a sulfuric acid solution, which is readily available and effective for the oxidation process. The use of a reference electrode, such as an Ag/AgCl electrode, in contact with the acidic environment, alongside a metal counter electrode, further enhances the control and efficiency of the electrochemical oxidation process. In embodiments of the present invention a voltage or a current is applied for the electrochemical oxidation. It is also advantageous that the voltage for the oxidation can be applied potentiostatically (i.e. constant voltage), adjusted through linear or cyclic sweeping, or the current can be applied galvanostaically (i.e. constant current), allowing for precise control over the thickness and porosity of the resulting metal oxide layer. It is also advantageous that the mesoporous oxide can be formed in a two-electrode setup without the use of reference electrode as well.

Moreover, it is an advantage that a patterned mask can be deposited on the metallic nitride substrate prior to electrochemical oxidation, enabling the formation of a patterned metal oxide layer, which opens up new possibilities for the design and fabrication of advanced electronic devices. The resulting metal oxide layer, comprising a metal oxide nano-dimensional scaffold structure with a 3D network of interconnected pores, particularly when the metal oxide is titanium dioxide, offers significant benefits in terms of electrical conductivity and volumetric surface area.

The application of such a metal oxide layer as an electrode in a battery or as a substrate for ion-catalysed reactions, demonstrates the versatility and utility of the invention. Furthermore, the use of the patterned metal oxide layer in molecular synthesis of proteins and DNA highlights the broad applicability of the invention in various fields, from energy storage to electrochemical processing and chemical manufacturing, showcasing the invention's potential to significantly impact multiple industries.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

## Brief description of the drawings

FIG. 1 is an exemplary flow chart of a method according to embodiments of the present invention.

FIG. 2 is a schematic drawing of a 3-electrode electrochemical cell used for electrochemical oxidation (or anodization) according to embodiments of the present invention.

FIG. 3 is a current density versus voltage diagram obtained when applying a cyclic voltammetry method according to embodiments of the present invention.

FIG. 4 is a SEM image of a metallic nitride substrate (left image) and a SEM image of a metal oxide layer (right image) obtained after applying a method according to embodiments of the present invention on the metallic nitride substrate.

FIG. 5 shows TEM images illustrating the mesoporous structure of the metal oxide layer obtained using a method according to embodiments of the present invention.

FIG. 6 shows in the right TEM image from FIG. 5 as well as a schematic drawing of an amorphous 3D-nano-$TiO_2$ structure in accordance with embodiments of the present invention.

FIG. 7 shows subsequent steps when fabricating a patterned metal oxide layer using a method according to embodiments of the present invention.

FIG. 8 is a current-voltage graph illustrating electrochemical characterization of a mesoporous 3D interconnected metal oxide layer obtained from completely anodizing a metal nitride layer according to embodiments of the present invention.

FIG. 9 is the current-voltage characteristic at different cyclic voltammetry scan rates to completely anodize a metal nitride layer when applying a method according to embodiments of the present invention.

FIG. 10 shows graphs which illustrate the different chemical elements before and after anodization of the titanium nitride (TiN) layer using a method according to embodiments of the present invention.

FIG. 11 is the current-voltage characteristic for different cycle numbers obtained during anodization via cyclic voltammetry at a fixed scan rate when applying a method according to embodiments of the present invention.

FIG. 12 is the current-voltage characteristic when performing the electrochemical oxidation of the metallic nitride substrate in an acidic environment and when performing the electrochemical oxidation of the metallic nitride substrate in a basic environment using a method according to embodiments of the present invention.

FIG. 13 is the current-voltage characteristic for reversible ion insertion currents in different metal oxide layers which are obtained after completely anodizing the metal nitride layer with different number of cycles using a method according to embodiments of the present invention.

FIG. 14 is the current voltage characteristic for reversible ion insertion currents in different metal oxide layers which are obtained with different cyclic voltammetry scan rates using a method according to embodiments of the present invention.

FIG. 15 is the current voltage characteristic for reversible ion insertion currents in different metal oxide layers which are obtained in an acidic environment versus a basic environment using a method according to embodiments of the present invention.

In the different figures, the same reference signs refer to the same or analogous elements.

## Detailed description of illustrative embodiments

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top and over and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", also used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be interpreted as being limited to devices consisting only of components A and B. It means that with respect to the present invention, the only relevant components of the device are A and B. The term "comprising" therefore covers the situation where only the stated features are present and the situation where these features and one or more other features are present. The word "comprising" according to the invention therefore also includes as one embodiment that no further components are present. When the word "comprising" is used to describe an embodiment in this application, it is to be understood that an alternative version of the same embodiment, wherein the term "comprising" is replaced by "consisting of", is also encompassed within the scope of the present invention.

Similarly, it is to be noticed that the term "coupled" should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some, but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention.

As used herein, and unless otherwise specified, the term "metallic nitride substrate" refers to a substrate composed of a compound containing a metal element and nitrogen, such as titanium nitride (TiN), which can be used as a starting material for forming the metal oxide layer through electrochemical oxidation.

As used herein, and unless otherwise specified, the term "electrochemical oxidation" refers to a process in which the metallic nitride substrate is oxidized by applying an electrical potential in an acidic or basic environment, resulting in the formation of a metal oxide layer on the surface of the substrate. This process is facilitated by a gas-evolving reaction, such as the release of nitrogen gas from the metal oxide layer during the oxidation process.

As used herein, and unless otherwise specified, the term "acidic environment" refers to a solution or medium having a pH below 7, such as a sulfuric acid solution, which provides the necessary conditions for the electrochemical oxidation of the metallic nitride substrate.

As used herein, and unless otherwise specified, the term "basic environment" refers to a solution or medium having a pH above 7, such as a potassium hydroxide solution, which provides the necessary conditions for the electrochemical oxidation of the metallic nitride substrate.

As used herein, and unless otherwise specified, the term "reference electrode" refers to an electrode, such as a silver/silver chloride (Ag/AgCl) electrode, that maintains a stable and known potential in the acidic or basic environment used and serves as a reference point for controlling the electrochemical oxidation process.

As used herein, and unless otherwise specified, the term "metal counter electrode" refers to an electrode composed of a metal material, such as titanium or platinum which is placed in the acidic or basic environment and facilitates the flow of electrical current during the electrochemical oxidation process.

As used herein, and unless otherwise specified, the term "linear sweeping" refers to a method of applying a voltage during the electrochemical oxidation process, in which the voltage is varied linearly with time between a starting and ending value.

As used herein, and unless otherwise specified, the term "cyclic sweeping" refers to a method of applying a voltage during the electrochemical oxidation process, in which the voltage is varied cyclically between two or more values.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

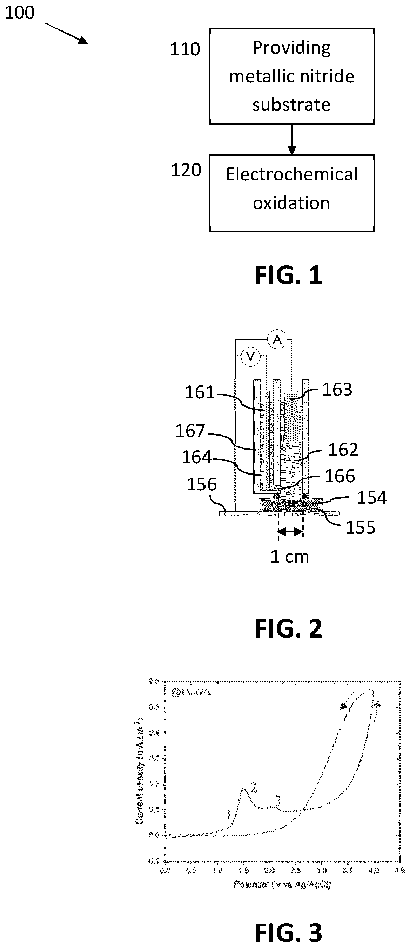

In the first aspect, the present invention relates to a method (100) for fabricating a metal oxide layer (200). FIG 1 shows an exemplary flow chart of such a method (100). The method (100) comprises:

- providing (110) a metallic nitride substrate (154);
- performing (120) electrochemical oxidation of the metallic nitride substrate (154) in an acidic environment (162) or in a basic environment to form the metal oxide layer (200);
- wherein the electrochemical oxidation is facilitated by the formation and release of nitrogen gas from the metal oxide layer (200) to create a mesoporous oxide structure.

In embodiments, the metallic nitride may be titanium nitride. Titanium nitride is an ideal substrate (154) for forming porous titanium dioxide.

In embodiments, the acidic environment (162) may comprise a sulfuric acid solution.

In embodiments, the electrochemical oxidation of the metallic nitride substrate (154) (e.g. titanium nitride substrate) may be achieved using a reference electrode (161) in contact with the acidic environment (162), and a metal counter electrode (163) in the acidic environment (162). This three-electrode setup, the third electrode being the metallic nitride substrate (154), enables precise control over the oxidation process. The voltage (or current) to the metallic nitride substrate (154) on carrier substrate (155) can be applied using conductive piece (156).

In embodiments, the electrochemical oxidation may also be achieved using a two-electrode setup. In embodiments, the current control may be galvanostatic (i.e. wherein the current is kept constant during the process) and the potential control can be potentiostatic (i.e. wherein the voltage is kept constant during the process).

FIG. 2 shows a schematic drawing of an electrochemical cell which may be used for electrochemical oxidation (also referred to as anodization) in a method (100) in accordance with embodiments of the present invention. The cell includes a reference electrode (161) in contact with an acidic electrolyte (162) (alternatively this may be a basic electrolyte), a metal counter electrode (163) in the acidic (or basic environment) (162), and the metallic nitride substrate (154) undergoing electrochemical oxidation. In embodiments of the present invention the reference electrode (161) comprises an AgCl coated Ag-wire in a 3M KCl solution and its frit. In embodiments of the present invention the electrochemical cell (167) is a Teflon container. The container has two compartments housing the reference electrode (161) and the metal counter electrode (163). The reference electrode via a Luggin capillary (166), that ensures very low potential drop within it, allows to exactly monitor the potential at the titanium nitride electrode (154). In embodiments of the present invention the reference electrode (161) is electrochemically in contact with the external acidic (or basic) anodizing environment through the frit. The metallic nitride substrate (154) is in direct contact with the acidic (or basic) environment (162). In this example the metallic nitride substrate (154) is a TiN substrate. It has a thickness of 150 nm and is present on a Ti layer which has a thickness of 15 nm. The Ti layer is provided on a p-doped Si substrate. In this example the cell comprises an Ag/AgCl reference electrode (161) with a 3M KCl filling solution. In this example the counter electrode is a Ti electrode and the acidic environment (162) is a 1.68M $H_2SO_{4(aq)}$ environment. A voltage can be applied between the TiN substrate (154) and the reference electrode (161) resulting in a current through the Ti counter electrode (163) and the TiN substrate (154) or vice versa.

In embodiments, performing electrochemical oxidation may include applying a voltage between the metallic nitride substrate (154) and the reference electrode (161) or applying a current through the metal counter electrode (163). Applying a voltage or current drives the oxidation reaction. In embodiments of the present invention the voltage between the metallic nitride substrate (154) and an Ag/AgCl reference electrode (161) at least reaches 1 volt. At this potential the oxidation starts. Depending on the voltage limit selected for cyclic weeping, a higher number of cycles may be selected to fully oxidize the entire thickness of the metallic nitride.

In an exemplary embodiment of the present invention a mesoporous titanium oxide layer ($TiO_2$) is fabricated by electrochemically oxidizing a TiN substrate.

FIG. 3 shows a current density versus voltage diagram obtained when applying a method (100) in accordance with embodiments of the present invention. In the figures which show a current-voltage characteristic the current is expressed as a current density (mA/cm$^2$) and the voltage is measured in reference to an Ag/AgCl electrode.

Wafer coupons comprising a stack of a p-Si substrate with on top thereof a 15 nm Ti layer and on top thereof a 150 nm TiN layer were employed as working electrodes in a three-electrode electrochemical cell, with a Ti-mesh counter electrode and an Ag/AgCl (3M KCl) reference electrode. The anodization process was carried out by subjecting the TiN working electrode to linear sweep or cyclic voltammetry, potentiostatic or galvanostatic techniques in a 1.68M $H_2SO_4$ electrolyte. Notably, low voltages of approximately 4-6 V were sufficient to oxidize the entire 150 nm thickness, as the release of molecular $N_2$ during the process facilitated the opening of the electrode structure.

The cyclic voltammogram at 15mV/s scan rate shows suspected reactions at different numbered points (1, 2, 3) along the voltammogram.

1)

$$TiN + \tfrac{1}{2}\, H_2O \rightarrow TiNO_{1/2} + e^- + H^+$$

2)

$$TiNO_{1/2} + 3/2\, H_2O \rightarrow TiO_2 + 3e^- + 3H^+ + \tfrac{1}{2}\, N_2\, (s)$$

3)

$$N_2\, (s) \rightarrow N_2 \nearrow$$

As soon as the voltage V versus the Standard Hydrogen Electrode (SHE) exceeds 1.8V reaction (2) results in the formation of $N_2$ gas. However, a restructuring process is necessary, and only when the mesopores become interconnected can the $N_2$ gas escape. Initially the $N_2$ gas is trapped within the structure (denoted as solid (s) in reaction (2), as it is confined within the $TiO_2$ solid). This entrapment is crucial for driving the formation of the pores.

The increased currents during the reverse scan indicate the formation of a porous structure and lowering of the metal oxide layer (200) resistance. The layer can be partially or completely anodized by varying the peak voltage for the voltammogram or by changing the number of cyclic voltammetry scans. In the second aspect, the present invention relates to a metal oxide layer (200) wherein the metal oxide layer (200) comprises a mesoporous interconnected metal oxide structure (210) comprising a 3D network of interconnected pores (212). The metal oxide structure (e.g. $TiO_2$), according to embodiments of the present invention, is particularly interesting for applications of photovoltaics (dye sensitized solar cells), photo-catalysis, sensors, and ion charging layers for e.g. DNA synthesis.

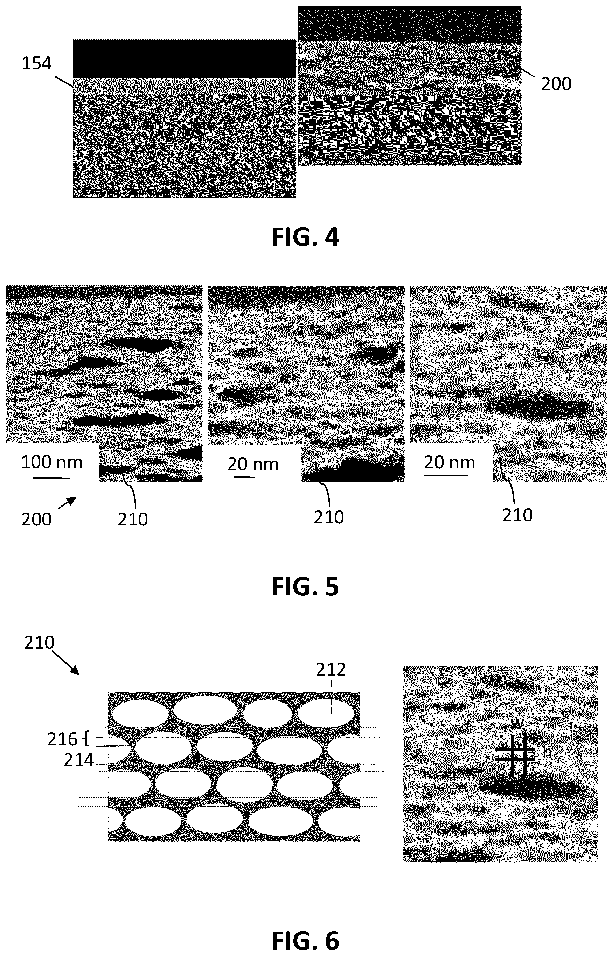

FIG. 4 shows a SEM image of a titanium nitride substrate (154) (left image) which has a thickness of approximately 168 nm and a SEM image of a titanium oxide layer (200) (right image) obtained after applying a method (100) in accordance with embodiments of the present invention on the titanium nitride substrate (154). The electrochemical oxidation results in the formation and release of $N_2$ gas within the electrode, resulting in a swelled-up rough and porous oxide layer (200) of almost 4 times the original thickness (approximately 590 nm) after complete anodization.

FIG. 5, which shows TEM images on a 100 nm scale, on a 20 nm scale, and on a different 20 nm scale) illustrating the mesoporous structure of the titanium oxide layer (200) obtained using a method (100) in accordance with embodiments of the present invention. It is an advantage of embodiments of the present invention that creation of targeted, conformal and patterned amorphous 3D mesoporous $TiO_2$ is achieved. The release of $N_2(g)$ from the metal oxide opens up the structure and creates a 3D network of interconnected pores within a 3D monolithic $TiO_2$ nanostructure (210) with pore sizes of 2-10 nm or larger. The pore sizes are not limited to 10 nm. They may for example also be up to 20 nm or 30 nm. Also bigger pores (e.g. of 50 nm) may be present, for example caused by handling of the metal oxide layer (200), resulting in cracks.

FIG. 6 shows the right TEM image of FIG. 5 as well as a schematic drawing of the amorphous 3D-nano-$TiO_2$ structure. An amorphous 3D-nano-$TiO_2$ structure is obtained with a few nm (e.g. 2-10 nm, or even 2-8 nm, or even 2-6 nm, or even 2-4 nm) thin a-TiO2 scaffold. The pores (212) are elongated pores giving an apparent sheet like structure (216) with $TiO_2$ interconnections (214) between the sheets (216). The pores are interconnected giving easy access to the nano-$TiO_2$ by gas and liquids introduced into these pores. In the right TEM width (w=7.6nm) and heigh (h=4.2nm) of one of the pores is indicated.

In embodiments, a fully interconnected amorphous 3D mesoporous TiOz nanostructure (210) is obtained, wherein the TiOz is a monolithic scaffold with interconnected 3D pores.

In embodiments, not only the $TiO_2$ is fully interconnected, but also the pores (212) are interconnected. The distribution of the pores (212) within the structure appears somewhat random, yet a discernible pattern is evident in the TEM images. Elongated pores are positioned next to each other. Thus, a sheet like structure (216) is formed (see FIG. 6). The interconnection of the pores (212) is inferred from the substantial currents observed during cation insertion. These 3D pores contribute to a three-dimensional structure as they span various dimensions and orientations.

It was a surprise for the inventors that a mesoporous and ordered metal oxide structure comprising a 3D network of interconnected pores can be formed by nitrogen gas escaping through the metal oxide layer.

Indeed, it would be expected that the nitrogen gas would escape in a way that gives preferential growth of vertical structures as for example in normal Ti anodization, or the anodic aluminum oxide template in Al anodization.

It would, moreover, be expected that the release of gas would entirely break the structure or cause its delamination.

There would also be a risk that the formed oxide could dissolve/etch in the electrolyte.

In view of the 3D mesoporous amorphous TiO2 scaffold with elongated pores, and an apparent sheet like structure it is assumed by the inventors that this hints to the following process:

- Pockets of $N_2$ and the metal oxide form simultaneously at the top initially forming a dense structure that increases the resistance and causes a peak to appear in the voltammogram (see FIG. 3)
- The pockets are then emptied at more positive potentials and cause the layer resistance to decrease allowing for the 3D scaffold to grow further below. This gives rise to the "sheet-like" structure as see in the schematic and the TEM cross-section image.

In embodiments of the present invention 1V is the minimum potential for oxidation to start (when using an Ag/AgCl reference electrode).

In embodiments of the present invention there is a specific moment when the porosity formation starts ($N_2$ gas released). The $N_2$ gas release is marked by a second potential peak (FIG. 3, step 3). In embodiments of the present invention the electrochemical oxidation is performed such that the porosity formation starts close to the potential marked by the second potential peak in the voltammogram.

When having a closer look at the cyclic voltammograms obtained at different scan rates it is noted that:
The second potential peak (indicating the $N_2$ gas released) itself varied a bit between different experiments, but always appeared at or after +2V for CV scan rates at 15 mV/s. The second potential peak for CV scan rates at 1 mV/s is also close to +2V.

In embodiments of the present invention a voltage of close to +2.25V (when using an Ag/AgCl reference electrode) was needed for an exponential current increase to start at all CV scan rates.

The calculations below illustrate the possible area enhancement in a 590 nm thick mesoporous $TiO_2$ layer. The calculations are made assuming average pore dimensions from the TEM images.

$$\text{Area enhancement } (\beta) = \frac{\rho \left( \frac{V_{total}}{V_{pore}} \right) A_{s,pore}}{A_{geometric}}$$

Assuming spherical pores:

| | |
|---|---|
| Porosity ($\rho$) | = 0.5 |
| $V_{total}$ | = $(\pi \times 0.45 \times 0.45) \times 590 \times 10^{-7}$ cm$^3$ |
| $V_{pore, \, spherical}$ | = 4/3 $\pi$ $r_{mean,p}^3$ |
| $A_{s,pore}$ | = 4 $\pi$ $r_{mean,p}^2$ |
| | = $(\pi \times 0.45 \times 0.45)$ cm$^2$ |
| $\beta$ | = 0.5 $\times$ ($/r_{mean,p}$) $\times$ 590 $\times 10^{-1}$, where $r_{mean,p}$ *is in cm* |

Using $r_{mean,p}$ = 3nm (mean pore width = 6nm), $\beta$ = 295

Assuming ellipsoidal pores:

| | |
|---|---|
| Porosity ($\rho$) | = 0.5 |
| $V_{total}$ | = $(\pi \times 0.45 \times 0.45) \times 590 \times 10^{-7}$ cm$^3$ |
| $V_{pore, \, spherical}$ | = 4/3 $\pi$ abc |
| $A_{s,pore}$ | = 4 $\pi$ $[\{(ab)^{1.6} + (bc)^{1.6} + (ca)^{1.6}\}/3]^{1/1.6}$ |
| $A_{geometric}$ | = $(\pi \times 0.45 \times 0.45)$ cm$^2$ |

Using a = 3.8nm, b= 2.1nm, c=3nm, $\beta$ = 320

The 3D interconnected pore network provides high volumetric surface area and high porosity for enhanced performance.

In embodiments, the voltage may be applied by linear sweeping or cyclic sweeping. Sweeping the voltage may allow tuning the pore size and distribution in the metal oxide layer (200). By varying the scan rates during anodization via cyclic voltammetry, or by varying the currents and voltages during galvanostatic and potentiostatic processes respectively, the pore sizes and their distribution may be tuned.

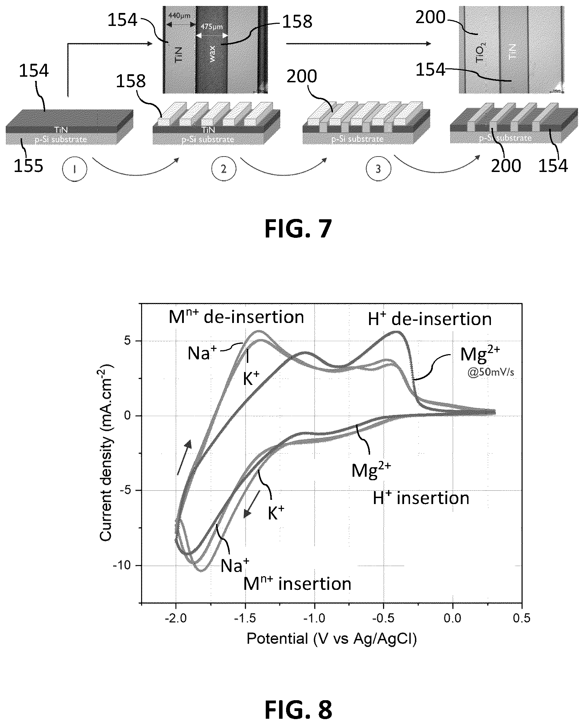

FIG. 7, shows subsequent steps and layer stacks when fabricating a patterned metal oxide layer using a method (100) in accordance with embodiments of the present invention. The steps include, providing the metallic nitride layer (154) on a carrier substrate (155), depositing a patterned mask (158) on the metallic nitride substrate (154), selective electrochemical oxidation in exposed areas, and removal of the mask (158) to obtain patterned anodized electrodes. Stack 1 shows a metallic nitride (e.g. TiN) layer (154) on top of a carrier substrate (155). This may for example be a p-doped silicon substrate with a 15nm layer of Ti for adhesion of TiN. Stack 2 is obtained by depositing a patterned mask (158) on the metallic nitride substrate (154). In the example this is achieved by the deposition of wax lines (158). Also other mask deposition techniques known by the person skilled in the art may be used. Stack 3 is obtained by electrochemical oxidation of the metallic nitride. This may for example be achieved via linear sweep voltammetry. The electrochemical oxidation only occurs in the areas exposed to the electrolyte and not covered by the mask. Stack 4 is obtained by selective removal of the mask. In case of wax lines the mask may be removed in acetone + IPA + water (or in 10% KOH) with constant stirring to obtain patterned anodized electrodes (e.g. TiN electrodes). Using these steps patterned mesoporous TiO$_2$ electrodes can be made. This opens up the possibility of its use in ion-catalysed controlled growth of proteins and DNA molecules.

The reason TiOz must be mesoporous with a high volumetric surface area is to have high cation (de)insertion currents. This is because (de)insertion processes are often surface limited. Electrochemical characterization of the completely anodized 590nm mesoporous oxide layers was performed by subjecting them to cyclic voltammetry at 50mV/s in separate aqueous solutions of 0.2M Na$_2$SO$_4$, 0.2M K$_2$SO$_4$, 0.2MLi$_2$SO4, 0.2M MgSO$_4$. High reversible currents were measured for H$^+$, Li$^+$, Na$^+$, K$^+$, and Mg$^{2+}$ insertion demonstrating the effectiveness of the mesoporous structure in enhancing cation insertion capabilities.

FIG. 8 shows a current voltage graph illustrating electrochemical characterization of a completely anodized metal oxide layer in accordance with embodiments of the present invention. Reversible insertion currents are measured for ions of different size, H$^+$ < Mg$^{2+}$ < Na$^+$ < K$^+$. The graph illustrates proton (H$^+$) and other cation (denoted as M$^{n+}$) insertion during in-situ reduction of TiO$_2$ electrodes in accordance with embodiments of the present invention and its role in introducing Ti(III) electron donor sites:

Charge storage via proton insertion: $Ti^{(IV)}O_2 + H^+ + e^- \rightarrow HTi^{(III)}O_2$.
Charge storage via monovalent cation insertion: $x\ M^+ + Ti^{IV}O_2 + x\ e^- \rightarrow M_xTi_x^{III}Ti_{1-x}^{IV}O_2$.
Charge storage via n-valent cation insertion: $x\ M^{n+} + Ti^{IV}O_2 + x\ e^- \rightarrow M_xTi_{nx}^{III}Ti_{1-nx}^{IV}O_2$.

An in-situ $Ti^{4+}/Ti^{3+}$ redox probe within the formed $TiO_2$ electrodes is effectively obtained in the above cases.

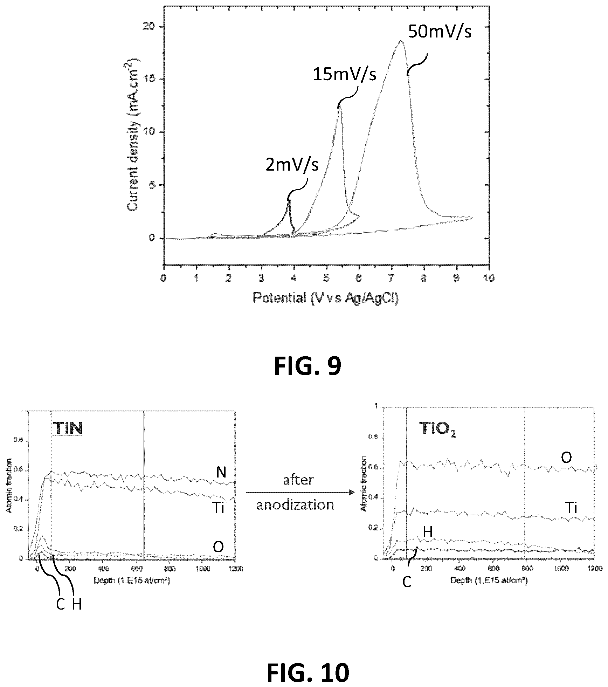

FIG. 9 shows the current-voltage characteristic at different cyclic voltammetry (CV) scan rates when applying a method (100) in accordance with embodiments of the present invention. The charge calculated from the area under the CV curve is approximately the same for different scan rates ranging from 380-400 $mC/cm^2$, implying the charge is mainly consumed for oxide formation with minimal $O_2$ evolution. The applied scan rates in this example are: 2mV/s, 15 mV/s and 50 mV/s.

FIG. 10 shows the different elements within the TiN layer before and after its anodization using a method in accordance with embodiments of the present invention. These plots are obtained using Elastic Recoil Detection Analysis (ERDA). Depth profiles for different elements which show their atomic fraction as a function of the depth within the layer in number of atoms/$cm^2$ are shown. The left graph shows the atomic fraction before oxidation and the right graph shows the atomic fraction after oxidation. No N is detected after oxidation. These graphs confirm the complete oxidation of the TiN layer to $TiO_2$, with no detectable N after anodization.

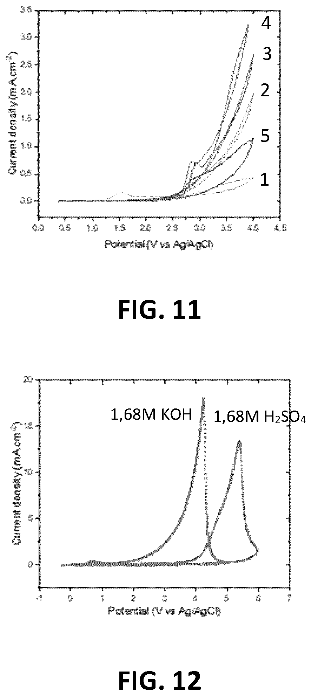

FIG. 11 shows the current-voltage characteristic for different cycle numbers (1, 2, 3, 4, 5) in a cyclic voltammogram obtained when applying a method (100) in accordance with embodiments of the present invention.

FIG. 12 shows the current-voltage characteristic when performing the electrochemical oxidation of the metallic nitride substrate in an acidic environment (1,68M $H_2SO_4$) and when performing the electrochemical oxidation of the metallic nitride substrate in a basic environment (1,68M KOH) using a method in accordance with embodiments of the present invention.

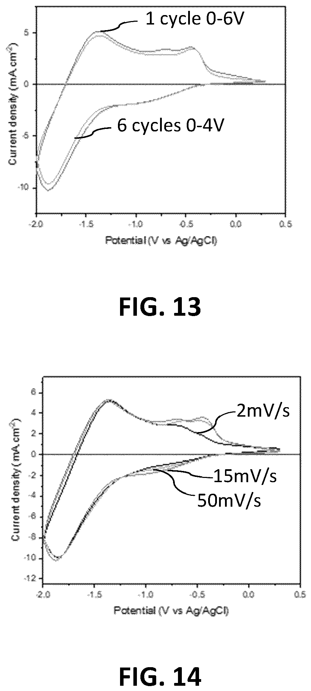

FIG. 13 shows the current-voltage characteristic of reversible ion insertion currents for different metal oxide layers (200) formed after completely anodizing the TiN layer (154). The $TiO_2$ electrodes are obtained via cyclic voltammetry using a method (100) in accordance with embodiments of the present invention, after one cycle from 0 to 6V and after 6 cycles from 0 to 4V.

FIG. 14 shows the current-voltage characteristic of reversible $Na^+$ ion insertion currents for different metal oxide layers (200) which are obtained with different cyclic voltammetry scan rates of 2 mV/s, 15 mV/s and 50 mV/s using a method (100) in accordance with embodiments of the present invention.

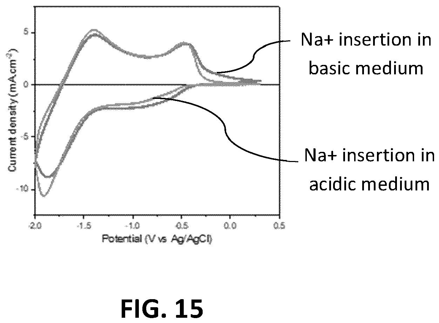

FIG. 15 shows the current-voltage characteristic of reversible $Na^+$ ion insertion currents for different metal oxide layers (200) which are obtained in an acidic environment (152) versus a basic environment using a method (100) in accordance with embodiments of the present invention. One curve represents Na-ion insertion characteristics of the metal oxide made in acidic medium, and the other one is for Na-ion insertion in the metal oxide made in basic medium.

In embodiments, the reference electrode (161) may be an Ag/AgCl electrode. Ag/AgCl provides a stable reference potential.

In embodiments, the method (100) may further comprise depositing a patterned mask (158) on the metallic nitride substrate (154) prior to electrochemical oxidation to form a patterned metal oxide layer.

The metal oxide of the battery is preferably a transition metal oxide where the metallic center has multiple stable oxidation states. The metal oxide layer (200) may for example comprise titanium dioxide, which can have sites in both the +4 ($Ti^{(IV)}$) and +3 ($Ti^{(III)}$) oxidation states for Ti. Titanium dioxide has excellent properties as a host for cation insertion.

In embodiments, the obtained thickness of the metal oxide layer is dependent on the parameters used for anodization (e.g. the cyclic voltammetry peak potentials, scan rate, number of cycles, and the thickness of the metal nitride that is started with). In embodiments, the metal oxide layer (200) may have a thickness of up to 600 nm starting from a 168nm TiN layer. The thickness of the obtained metal oxide layer is dependent on the thickness of the original metal nitride layer (154) and on the degree of oxidation of this layer. For a 168nm TiN layer that was fully oxidized, a 590nm of oxide was obtained. It is also possible to partially oxidize it and to get a lower thickness for the oxide. The thinnest layer which can be achieved is roughly the average dimension of the pores (212) plus the thickness of the apparent sheets (216) of $TiO_2$ which may for example range between 1 and 10 nm, for example between 1 and 2 nm, or for example between 1 and 4 nm, or for example between 2 and 6 nm, or for example between 6 and 10nm.

In embodiments, the pores (212) in the metal oxide layer (200) may for example have average sizes ranging from 2 to 20 nm, for example from 2 to 10 nm. The minimum thickness of the porous layer comprising the pores and the apparent sheets may for example be around 6-10 nm. In embodiments of the present invention the combined thickness of the mesoporous 3D interconnected metal oxide structure and the 3D network of interconnected pores may for example range between 2 and 20 nm.

In embodiments of the present invention the nano-dimensions of the metal oxide are ideal for facilitating ion insertion and transport. The metal oxide scaffold allows for faster ion diffusion kinetics within the metal oxide and gives large ion insertion currents in cyclic voltammograms.

In the third aspect, the present invention relates to a battery, wherein an electrode of the battery comprises a metal oxide layer (200) according to any embodiments of the second aspect. The porous metal oxide provides high reversible ion storage capacity for the battery.

In embodiments of the present invention the metal oxide layer of the battery comprises titanium dioxide It is an advantage that $TiO_2$ electrodes in accordance with embodiments of the present invention are able to accommodate various cations ($Li^+$, $Na^+$, $K^+$, $Mg^{2+}$, $H^+$, $Ca^{2+}$) from both aqueous and non-aqueous solutions. It is an advantage of embodiments of the present invention that fast insertion kinetics can be obtained because of the mesoporous 3D interconnected metal oxide structure (210) which has a thin metal oxide scaffold.

In the fourth aspect, the present invention relates to a metal ion insertion device for ion catalysed reactions containing at least one electrode which comprises a metal oxide layer in accordance with embodiments of the present invention. In embodiments of the present invention at least one electrode comprising the metal oxide layer may be patterned. A metal ion insertion device in accordance with embodiments of the present invention may be used for ion catalysed reactions such as in molecular synthesis of proteins and DNA, where the patterning of electrodes gives arrays for controlled growth.

The high volumetric surface area and ion insertion capabilities make the metal oxide layer (200) an ideal electrocatalyst support or ion source/sink for molecular synthesis.

In summary, in the present invention a strategy is demonstrated to fabricate mesoporous 3D interconnected metal oxide electrodes by the electrochemical oxidation (also referred to as anodization) of metal nitride substrates (154). The creation of its porous structure is facilitated by the formation and release of molecular $N_2$ during anodization. Thus, a metal oxide layer comprising a mesoporous interconnected amorphous metal oxide structure with a 3D network of interconnected metal pores in accordance with embodiments of the present invention is obtained. The pore sizes and distribution can be potentially varied based on the electrochemical technique used and by tuning the parameters of the same. These mesoporous 3D interconnected metal oxide electrodes show high reversible insertion currents for $H^+$, $Li^+$, $Na^+$, $K^+$, and $Mg^{2+}$ for applications in batteries and molecular synthesis.

It is to be understood that although preferred embodiments, specific constructions and configurations, as well as materials, have been discussed herein for devices according to the present invention, various changes or modifications in form and detail may be made without departing from the scope of this invention. For example, any formulas given above are merely representative of procedures that may be used. Functionality may be added or deleted from the block diagrams and operations may be interchanged among functional blocks. Steps may be added or deleted to methods described within the scope of the present invention.

## Claims

1. A method (100) for fabricating a metal oxide layer (200), comprising:

   - providing (110) a metallic nitride substrate (154);
   - performing (120) electrochemical oxidation of the metallic nitride substrate in an acidic environment or in a basic environment (162) to form the metal oxide layer;
   - such that during the electrochemical oxidation nitrogen gas escapes from the metal nitride substrate through the metal oxide layer and forms a mesoporous 3D interconnected metal oxide structure (210) comprising a 3D network of interconnected pores (212).

2. The method (100) according to claim 1, wherein the metallic nitride is titanium nitride and wherein the formed mesoporous 3D interconnected metal oxide layer is a $TiO_2$ layer comprising a 3D network of interconnected pores (212).

3. The method (100) according to any of the previous claims, wherein the formed pores (212) have average sizes ranging from 2 to 20 nm.

4. The method (100) according to any of the previous claims wherein a voltage or a current is applied for the electrochemical oxidation and wherein the voltage or the current is a constant voltage or a constant current or wherein the voltage or the current is applied by linear sweeping or cyclic sweeping.

5. The method (100) according to any of the previous claims wherein the electrochemical oxidation is achieved in a three-electrode electrochemical setup with a reference electrode (161) in contact with the acidic or basic environment (162), and a metal counter electrode (163) in the acidic or basic environment.

6. The method (100) according to claim 5 as long as dependent on claim 4, wherein performing electrochemical oxidation includes applying the voltage between the metallic nitride substrate (154) and the reference electrode (161) or applying the current through the metal counter electrode (163).

7. The method (100) according to any of the claims 1 to 4 wherein the electrochemical oxidation is achieved in a two-electrode electrochemical setup.

8. The method (100) according to any of the previous claims, further comprising depositing a patterned mask on the metallic nitride substrate (154) prior to electrochemical oxidation to form a patterned mesoporous metal oxide layer.

9. A metal oxide layer (200) wherein the metal oxide layer comprises a mesoporous 3D interconnected metal oxide structure (210) comprising a 3D network of interconnected pores (212).

10. The metal oxide layer (200) according to claim 9, wherein the metal oxide layer comprises titanium dioxide.

11. The metal oxide layer (200) according to any of the claims 9 to 10, wherein a combined thickness of the mesoporous 3D interconnected metal oxide structure and the 3D network of interconnected pores (212) ranges from 2 to 20 nm.

12. A battery, wherein an electrode of the battery comprises a metal oxide layer to any of the claims 9 to 11.

13. Use of a metal oxide layer according to any of the claims 9 to 11 as electrode in molecular synthesis.

14. A metal ion insertion device for ion catalysed reactions comprising at least one electrode which comprises a metal oxide layer according to any of the claims 9 to 11.

15. A metal ion insertion device according to claim 14 wherein the metal oxide layer is a patterned layer.

100

| 110 | Providing metallic nitride substrate |
| 120 | Electrochemical oxidation |

**FIG. 1**

161
167
164
156

163
162
166
154
155

1 cm

**FIG. 2**

**FIG. 3**

**FIG. 4**

**FIG. 5**

**FIG. 6**

**FIG. 7**

**FIG. 8**

**FIG. 9**

**FIG. 10**

**FIG. 11**

**FIG. 12**

**FIG. 13**

**FIG. 14**

FIG. 15

| | Europäisches Patentamt | | |
|---|---|---|---|
| | European Patent Office | **EUROPEAN SEARCH REPORT** | **Application Number** |
| | Office européen des brevets | | **EP 24 18 1251** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Montero I ET AL: "Surface oxidation of TIN, films", Surface Science 251/252, 1 January 1991 (1991-01-01), pages 1038-1043, XP093229408, North Holland Retrieved from the Internet: URL:https://www.sciencedirect.com/science/article/pii/003960289191147P [retrieved on 2024-11-29] * page 1038 * * page 1039 * * page 1042 * ----- | 1-4 | INV. C25D11/02 C25D11/34 H01M4/00 |
| X | MASSIANI Y ET AL: "Electrochemical study of titanium nitride films obtained by reactive sputtering", THIN SOLID FILMS, ELSEVIER, AMSTERDAM, NL, vol. 191, no. 2, 15 October 1990 (1990-10-15), pages 305-316, XP025731614, ISSN: 0040-6090, DOI: 10.1016/0040-6090(90)90382-N [retrieved on 1990-10-15] * page 305 * * page 306 * * page 307 * * page 312 * * page 314 * * figures 4,5 * ----- -/-- | 1-6 | TECHNICAL FIELDS SEARCHED (IPC) C25D H01M |

The present search report has been drawn up for all claims

| Place of search | Date of completion of the search | Examiner |
|---|---|---|
| The Hague | 3 December 2024 | Lampert, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

**EUROPEAN SEARCH REPORT**

**Application Number**

EP 24 18 1251

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Zhi-Yong Yu ET AL: "Visible Light Photoelectrochemical Response of Nitrogen Doped TiO2 Thin Films Prepared by Anodic Oxidation of Titanium Nitride Films", Acta Phys. Chim. Sin., 1 January 2009 (2009-01-01), pages 35--40, XP093229481, Retrieved from the Internet: URL:https://www.ingentaconnect.com/content/apcs/apcs/2009/00000025/00000001/art00008 [retrieved on 2024-11-29] * page 35 - page 37 * * figure 3 * ----- | 1-4,7 | |
| A | SURAJ NAGPURE ET AL: "Layer-by-Layer Synthesis of Thick Mesoporous TiO2 Films with Vertically Oriented Accessible Nanopores and Their Application for Lithium-Ion Battery Negative Electrodes", ADVANCED FUNCTIONAL MATERIALS, WILEY - V C H VERLAG GMBH & CO. KGAA, DE, vol. 28, no. 37, 27 July 2018 (2018-07-27), page n/a, XP072408073, ISSN: 1616-301X, DOI: 10.1002/ADFM.201801849 * page 1 * * figure 2 * ----- | 1-7 | TECHNICAL FIELDS SEARCHED (IPC) |

The present search report has been drawn up for all claims

| Place of search | Date of completion of the search | Examiner |
|---|---|---|
| The Hague | 3 December 2024 | Lampert, Felix |

EPO FORM 1503 03.82 (P04C01)

page 2 of 2

Europäisches
Patentamt

European
Patent Office

Office européen
des brevets

**Application Number**

EP 24 18 1251

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

2-7(completely); 1(partially)

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**

**SHEET B**

**Application Number**

EP 24 18 1251

The Search Division considers that the present European patent application does not comply with the requirements of unity of invention and relates to several inventions or groups of inventions, namely:

1. claims: 2-7(completely); 1(partially)

   A method for fabricating a metal oxide layer, comprising: providing a metallic nitride substrate; performing electrochemical oxidation of the metallic nitride substrate in an acidic environment or in a basic environment to form the metal oxide layer; such that during the electrochemical oxidation nitrogen gas escapes from the metal nitride substrate through the metal oxide layer and forms a mesoporous 3D interconnected metal oxide structure comprising a 3D network of interconnected pores, wherein the metallic nitride is titanium nitride and wherein the formed mesoporous 3D interconnected metal oxide layer is a TiO2 layer

   ---

2. claims: 8, 10, 11, 13-15(completely); 1, 9(partially)

   A method for fabricating a metal oxide layer, comprising: providing a metallic nitride substrate; performing electrochemical oxidation of the metallic nitride substrate in an acidic environment or in a basic environment to form the metal oxide layer; such that during the electrochemical oxidation nitrogen gas escapes from the metal nitride substrate through the metal oxide layer and forms a mesoporous 3D interconnected metal oxide structure comprising a 3D network of interconnected pores, further comprising a patterned mask on the metallic nitride substrate prior to electrochemical oxidation to form a patterned mesoporous metal oxide layer.

   ---

3. claims: 12(completely); 9(partially)

   A battery, comprising an electrode that comprises a metal oxide layer wherein the metal oxide layer comprises a mesoporous 3D interconnected metal oxide structure comprising a 3D network of interconnected pores.

   ---